# EUROPÄISCHE PATENTANMELDUNG

(11) **EP 4 344 981 A1**
(43) Veröffentlichungstag der Anmeldung: **03.04.2024**
(21) Anmeldenummer: 23196730.8
(22) Anmeldetag: 12.09.2023
(51) Int. Cl.: B62D 15/02, B60Q 1/44, B60W 30/12, B60W 30/14, B60W 30/16, G08G 1/16

(54) **VERFAHREN ZUM BETRIEB EINES KRAFTFAHRZEUGS**

(30) Priorität: 27.09.2022 DE 102022210165
(71) Anmelder: VOLKSWAGEN AG, 38440 Wolfsburg (DE)
(72) Erfinder: Münning, Daniel, 38124 Braunschweig (DE); Ackert, Lukas, 38373 Frellstedt (DE)

(57) **Zusammenfassung**

Die Erfindung betrifft ein Verfahren zum Betrieb eines Kraftfahrzeugs (2) mit einem verstellbaren Lenkrad (4) sowie mit einer Fahrerassistenzfunktion (F), wobei, wenn das Lenkrad (4) verstellt wird, die Fahrerassistenzfunktion (F) aktiviert und/oder die Fahrerassistenzfunktion (F) geändert wird. Des Weiteren betrifft die Erfindung ein solches Kraftfahrzeug (2).

## Beschreibung

Die Erfindung betrifft ein Verfahren zum Betrieb eines Kraftfahrzeugs mit einem verstellbaren Lenkrad sowie mit einer Fahrerassistenzfunktion.

Bei manchen Kraftfahrzeugen besteht die Möglichkeit dessen Lenkrad in Fahrzeuglängsrichtung und/oder in Fahrzeughochrichtung zu verstellen, so dass ein Fahrer des Kraftfahrzeugs das Lenkrad besser erreichen kann.

Erfolgt das Verstellen während der Fahrt, so wird typischerweise mit einer Hand das Lenkrad festgehalten und dabei genutzt, um das Lenkrad zu verstellen und in der gewünschten Lage zu positionieren. Mit der anderen Hand wird ein Mechanismus zum Lösen und/oder zum Feststellen des Lenkrads oder eine hierzu vorgesehene Verstellelektronik betätigt.

Das Fahren mit lediglich einer Hand am Lenkrad und/oder eine aufgrund des Verstellens des Lenkrads reduzierte Aufmerksamkeit des Fahrers für die aktuelle Fahrsituation kann in gefährlichen Fahrsituationen oder sogar in einem Unfall resultieren.

Aus der US 2016/0368522 A1 ist ein Verfahren zum Betrieb einer Lenksäulenbaugruppe eines autonom fahrenden Kraftfahrzeus bekannt. Hierbei kann die Lenksäule zwischen einer eingezogenen Position und einer Fahrposition verstellt werden. Wenn sich die Lenksäule in der eingezogenen Stellung befindet, ist die Richtungssteuerung automatisiert.

Der Erfindung liegt die Aufgabe zugrunde, einen besonders sicheren Betrieb des Kraftfahrzeugs zu ermöglichen.

Diese Aufgabe wird erfindungsgemäß gelöst durch ein Verfahren zum Betrieb eines Kraftfahrzeugs mit den Merkmalen des Anspruchs 1. Weiterhin wird die Aufgabe erfindungsgemäß gelöst durch ein Kraftfahrzeug mit den Merkmalen des Anspruchs 10. Vorteilhafte Ausgestaltungen und Weiterbildungen sind Gegenstand der Unteransprüche. Dabei gelten die Aus-führungen im Zusammenhang mit dem Verfahren sinngemäß auch für das Kraftfahrzeug und umgekehrt.

Das Verfahren dient dem Betrieb eines Kraftfahrzeugs, welches ein Lenkrad aufweist, das in Fahrzeuglängsrichtung und/oder in Fahrzeughochrichtung verstellbar ist. Unter der Fahrzeuglängsrichtung dabei eine Richtung zu verstehen, die von einem Fahrzeugheck zu einer Fahrzeugfront, und somit vom Fahrersitz zum Lenkrad hin, verläuft. Unter der Fahrzeughochrichtung ist die Richtung von einem Fahrzeugboden zu einem Fahrzeugdach hin verstehen. Die Verstellung des Lenkrads umfasst hier also nicht die Rotation dessen zum Einstellen eines Lenkwinkels, sondern die Änderung des Abstands des Lenkrads zum Fahrersitz (bzw. zum Fahrer) bezüglich der Fahrzeuglängs- und/oder bezüglich der Fahrzeughochrichtung.

Diese Verstellung ist dabei insbesondere dazu vorgesehen, dass ein Fahrer des Kraftfahrzeugs das Lenkrad für dessen Bedienung, also dem Lenken des Fahrzeugs, komfortabler und/oder besser erreichen kann. Bei der Verstellung des Lenkrads in oder entgegen der Fahrzeuglängsrichtung, und/oder bei der Verstellung des Lenkrads in oder entgegen der Fahrzeughochrichtung wird dieses also von einer ersten Lenkposition, welche dazu vorgesehen und eingerichtet ist, das Lenkrad zum Lenken des Kraftfahrzeugs, also zum Einstellen des Lenkwinkels durch Rotation des Lenkrads, zu betätigen, in eine zweite Lenkposition umpositioniert, welche ebenfalls dazu vorgesehen und eingerichtet ist, das Lenkrad zum Lenken des Kraftfahrzeugs, also zum Einstellen des Lenkwinkels durch Rotation des Lenkrads, zu betätigen.

Das Verstellen des Lenkrads kann beispielsweise anhand einer Kamera erfasst werden. Alternativ oder zusätzlich hierzu gilt das Verstellen des Lenkrads als erkannt, wenn ein Bedienelement einer Verstellelektronik zum automatischen Verfahren des Lenkrads bezüglich der Fahrzeuglängs- und/oder bezüglich der Fahrzeughochrichtung betätigt wird und/oder ist. Weiter alternativ oder zusätzlich gilt das Verstellen des Lenkrads als erkannt, wenn eine mechanische Verbindung zum Lösen des Lenkrads aus der Lenkradposition geöffnet wird. Beispielsweise ist hierbei ein Taster vorgesehen, der lediglich in der geöffneten Position der mechanischer Verbindung unbetätigt ist, und/oder es ist ein Dehnungsmessstreifen vorgesehen, anhand dessen das Moment auf und/oder die Position des Lenkrads bestimmt werden kann.

Des Weiteren umfasst das Kraftfahrzeug eine Fahrerassistenzfunktion. Insbesondere wird durch die Fahrerassistenzfunktion die Lenkung und/oder die Beschleunigung des Kraftfahrzeugs übernommen, mit anderen Worten wird die Lenkung und/oder die Beschleunigung des Kraftfahrzeugs durch das Fahrerassistenzfunktion bewirkt.

Die Norm "SAE J3016" beschreibt und klassifiziert die Einteilung der Automatisierung eines Kraftfahrzeugs in verschiedene Level (Stufen). So wird gemäß der SAE J3016 die Automatisierung des Kraftfahrzeugs einem Level zwischen "Level 0" (keine Automatisierung/keine Automation) und "Level 5" (Vollautomatisierung) zugeordnet. Insbesondere ist hinsichtlich des erfindungsgemäßen Verfahren die Fahrerassistenzfunktion des Kraftfahrzeugs, eine Fahrerassistenzfunktion für "Level 1" und/oder für "Level 2" gemäß der SAE J3016. Hierbei trägt der Fahrer also stets die Verantwortung für das Führen des Kraftfahrzeugs.

Verfahrensgemäß wird, wenn das Lenkrad in oder entgegen der Fahrzeughoch- und/oder in oder entgegen der Fahrzeuglängsrichtung verstellt wird, die Fahrerassistenzfunktion aktiviert, also gestartet. Zusätzlich oder alternativ hierzu wird die Fahrerassistenzfunktion, insbesondere ein Parameter und/oder eine Einstellung der Fahrerassistenzfunktion, aufgrund des Verstellens des Lenkrads geändert.

Insbesondere wird ein Sondermodus des Fahrzeugbetriebs gestartet, wenn das Lenkrad verstellt wird, welcher Sondermodus das Starten der Fahrerassistenzfunktion und/oder die Änderung der Fahrerassistenzfunktion bewirkt.

Vorteilhaft wird durch das Aktivieren der Fahrerassistenzfunktion und/oder durch die Änderung der Fahrerassistenzfunktion der aktuelle Fahrbetrieb an diese Situation angepasst. Damit einhergehend ist eine Sicherheit für den Fahrer während der Verstellung des Lenkrads erhöht.

Gemäß einer zweckmäßigen Ausgestaltung ist die aufgrund des Verstellens des Lenkrads aktivierte Fahrerassistenzfunktion bzw. die aufgrund des Verstellens vorgenommene Änderung der Fahrerassistenzfunktion lediglich für eine vorgegebene Zeitdauer seit der Aktivierung bzw. seit der Änderung der Fahrerassistenzfunktion, oder für eine vorgegebene durch das Kraftfahrzeug seit der Aktivierung bzw. seit der Änderung der Fahrerassistenzfunktion zurückgelegte der Distanz aktiv. Mit anderen Worten wird die Fahrerassistenzfunktion nach der vorgegebenen Zeitdauer oder nach der vorgegebenen zurückgelegten Distanz beendet, und/oder die Änderung der Fahrerassistenzfunktion nach der vorgegebenen Zeitdauer oder nach der vorgegebenen zurückgelegten Distanz rückgängig gemacht, also die Fahrerassistenzfunktion in dem Zustand unmittelbar vor deren Änderung weiter betrieben. Beispielsweise beträgt die Zeitdauer 2 Sekunden.

Zusammenfassend ist die Aktivierungsdauer der Fahrerassistenzfunktion und/oder die Aktivierungsdauer deren Änderung, zeit- und/oder distanzabhängig. Vorzugsweise wird der Fahrer anschließend mittels akustischer, optischer und/oder haptischer Signale vor dem Abschalten bzw. dem Rückgängigmachen der Änderungen der Fahrerassistenzfunktion informiert.

Gemäß einer geeigneten Ausgestaltung wird als Fahrerassistenzfunktion ein Abstandsregeltempomat (engl. "adaptive cruise control") herangezogen. Dieser wird also aktiviert, wenn das Lenkrad verstellt wird. Zusätzlich oder alternativ hierzu wird die Zeitlücke des Abstandsregeltempomats geändert, zweckmäßiger Weise vergrößert, wenn das Lenkrad verstellt wird. Die Zeitlücke ist dabei ein Parameter des Abstandsregeltempomats.

Alternativ oder zusätzlich hierzu wird, wenn das Lenkrad verstellt wird, eine Setzgeschwindigkeit, also eine - beispielsweise durch den Fahrer - vorgegebene Maximal- oder Soll-Geschwindigkeit für das Kraftfahrzeug, für eine Geschwindigkeitsregelung, beispielsweise im Rahmen des Abstandsregeltempomats oder eines Tempomats, geändert, insbesondere reduziert.

In zweckmäßiger Ausgestaltung wird eine Maximalgeschwindigkeit für das Kraftfahrzeug vorgegeben, wenn, und vorzugsweise solange, das Lenkrad verstellt wird. Mit anderen Worten wird das Kraftfahrzeug derart betrieben, dass dieses nicht schneller das diese Maximalgeschwindigkeit fährt. Insbesondere bildet das Begrenzen der Fahrzeuggeschwindigkeit hierbei die Fahrerassistenzfunktion. Insbesondere wird die Maximalgeschwindigkeit von dieser Fahrerassistenzfunktion vorgegeben, wenn das Lenkrad verstellt wird. Beispielsweise wird, wenn das Kraftfahrzeug steht und das Lenkrad verstellt wird, die Maximalgeschwindigkeit des Kraftfahrzeugs auf 0 (Null) reduziert, sodass ein Anfahren während des Verstellen des Lenkrads verhindert ist.

Gemäß einer geeigneten Ausgestaltung wird ein Spurhalteassistent, insbesondere ein solcher mit Lenkreingriff, als Fahrerassistenzfunktion verwendet. Dieser wird aktiviert, wenn das Lenkrad verstellt wird. Zusätzlich oder alternativ hierzu wird eine Mindestgeschwindigkeit (als Parameter einer solchen Fahrerassistenzfunktion), die das Kraftfahrzeug für die Aktivierung des Spurhalteassistenten, insbesondere für die Vornahme eines Lenkeingriffs durch den Spurhalteassistenten, haben muss, reduziert, also geändert.

Weiter zusätzlich oder alternativ wird diejenige Abweichung zur Fahrspurmitte, also diejenige Distanz des Kraftfahrzeugs, insbesondere dessen Mittelebene, zur Fahrspurmitte reduziert, ab welcher ein Lenkeingriff durch den Spurhalteassistenten erfolgt. Das Kraftfahrzeug wird also "straffer" in der Fahrspurmitte geführt.

Beispielsweise wird alternativ oder zusätzlich hierzu ein Schwellenwert für ein von Fahrer auf das Lenkrad bewirkte Drehmoment für eine Lenkbewegung, bei welchem Schwellenwert die Steuerung des Kraftfahrzeugs durch den Spurhalteassistenten deaktiviert wird, erhöht. Also wird, wenn das Lenkrad verstellt wird, eine Schwelle für das Übersteuern (Überlenken) des Spurhalteassistenten erhöht.

In zweckmäßiger Ausgestaltung wird eine maximale Längs- und/oder eine maximale Querbeschleunigung des Kraftfahrzeugs für die Steuerung des Kraftfahrzeugs anhand der oder einer Fahrerassistenzfunktion, insbesondere des Spurhalteassistenten oder einer Geschwindigkeitsregelung eines Tempomaten oder Abstandsregeltempomat erhöht, wenn das Lenkrad verstellt wird.

Gemäß einer geeigneten Weiterbildung wird eine Aktivierungsschwelle der Fahrerassistenzfunktion, insbesondere eine Aktivierungsschwelle zum Bewirken einer Längs- und/oder Querbeschleunigung, reduziert, wenn das Lenkrad verstellt wird. Die Aktivierungsschwelle als Parameter der Fahrerassistenzfunktion wird also geändert. Die Aktivierungsschwelle ist dabei insbesondere der Betrag einer Größe, der überschritten werden muss, damit die Fahrerassistenzfunktion das Kraftfahrzeug oder Teile davon steuern und/oder insbesondere eine Längs- oder Querbeschleunigung des Kraftfahrzeugs, bewirken kann. Beispielsweise wird ein Schwellenwert für die Länge einer erkannten Spurbegrenzung, beispielsweise von Fahrstreifen auf der Fahrbahn, reduziert, der erreicht werden muss, bevor ein Lenkeingriff oder eine Beschleunigung des Kraftfahrzeugs durch die Fahrerassistenzfunktion durchgeführt werden kann. Beispielsweise wird die dieser Schwellenwert halbiert. Weiter beispielsweise kann, wie weiter oben bereits dargestellt, die Mindestgeschwindigkeit für den Lenkeingriff des Spurhalteassistenten reduziert.

Auf diese Weise kann das Fahrerassistenzsystem vorteilhaft zur Unterstützung des Fahrers auch dann genutzt werden, wenn die sonst geltenden Aktivierungsschwellen noch nicht überschritten sind.

Gemäß einer vorteilhaften Ausgestaltung wird, ein beispielsweise akustisches, optisches und/oder haptisches Warnsignal an den Fahrer ausgegeben, zweckmäßiger Weise, wenn das Lenkrad verstellt wird, wenn die Fahrerassistenzfunktion aufgrund dessen aktiviert oder geändert wird, und/oder wenn die Fahrerassistenzfunktion beendet oder dessen Änderung rückgängig gemacht wird, und/oder wenn nach einer vorgegebenen Zeitdauer der Verstellvorgang noch nicht beendet wurde.

Die Art und/oder Ausgestaltung ist insbesondere Abhängigkeit von der Geschwindigkeit des Kraftfahrzeugs (Fahrzeuggeschwindigkeit). Insbesondere ist eine Intensität des Warnsignals, beispielsweise dessen Lautstärke größer, je größer die Fahrzeuggeschwindigkeit ist.

Der Fahrer wird vorteilhaft über den geänderten Fahrbetrieb informiert und/oder dazu angeregt, das Verstellen möglichst schnell zu beenden.

Zweckmäßig können des Weiteren auch andere Fahrzeugsysteme auf das Verstellen des Lenkrads reagieren. Beispielsweise wird ein Gurt straffer gestellt, ein Bremszylinder einer Bremse vorbefüllt ("prefill"), oder eine Lautstärke eines Audiosystems reduziert.

Ein weiterer Aspekt der Erfindung betrifft ein Kraftfahrzeug, das ein in Fahrzeuglängs- und in Fahrzeughochrichtung verstellbares Lenkrad, eine Fahrerassistenzfunktion, sowie eine Einrichtung zur Durchführung des Verfahrens in einer der oben dargestellten Varianten aufweist. Die Einrichtung umfasst hierbei insbesondere einen Sensor zum Erfassen der Verstellung des Lenkrads. Dieser ist oder umfasst beispielsweise eine Kamera, oder ein Bedienelement einer Verstellelektronik zum automatischen Verfahren des Lenkrads.

Beispielsweise umfasst die Einrichtung weiterhin einen Sensor zur Erfassung von Umgebungsdaten, insbesondere zur Erkennung einer Fahrspur auf der Fahrbahn, und/oder zur Erfassung von Fahrzeugdaten, wie beispielsweise der aktuellen Fahrzeuggeschwindigkeit.

Zweckmäßiger Weise umfasst die Einrichtung weiterhin eine Steuereinheit. Beispielsweise ist Programmcode auf einem Speicher der Steuereinheit hinterlegt, der die Fahrerassistenzfunktion umfasst bzw. repräsentiert, wobei bei dessen Ausführung durch die Steuereinheit die Fahrerassistenzfunktion durchgeführt wird. Der Programmcode und somit die Fahrerassistenzfunktion ist dabei derart ausgebildet, dass die Fahrerassistenzfunktion automatisch startet oder dass die Fahrerassistenzfunktion, insbesondere ein Parameter und/oder eine Einstellung der Fahrerassistenzfunktion, automatisch geändert wird, wenn das Lenkrad verstellt wird. Die Steuereinheit ist beispielsweise Bestandteil des Fahrzeugsteuergeräts oder Teil einer Auswerte- und Steuereinheit einer der Sensoren.

Geeigneter Weise ist die Steuereinheit mit den Sensoren signalübertragungstechnisch verbunden. Zudem ist die Steuereinheit zweckmäßig mit einer Lenkung und/oder mit einem Antrieb des Kraftfahrzeugs signalübertragungstechnisch verbunden, um diese gemäß der aktivierten und/oder geänderten Fahrerassistenzfunktion anzusteuern.

Zusammenfassend ist die Einrichtung dazu vorgesehen und eingerichtet, dass das Verstellen des Lenkrads erfassbar ist, und dass die Fahrerassistenzfunktion gestartet und/oder diese geändert werden kann, wenn das Lenkrad verstellt wird.

Nachfolgend werden Ausführungsbeispiele der Erfindung anhand einer Zeichnung näher erläutert. Darin zeigen:
- Fig. 1: schematisch ein Kraftfahrzeug mit einem verstellbaren Lenkrad sowie mit einer Fahrerassistenzfunktion, und
- Fig. 2: in einem Flussdiagramm einen Verfahrensablauf zum Betrieb des Kraftfahrzeugs.
Einander entsprechende Teile und Größen sind in allen Figuren stets mit gleichen Bezugszeichen versehen.

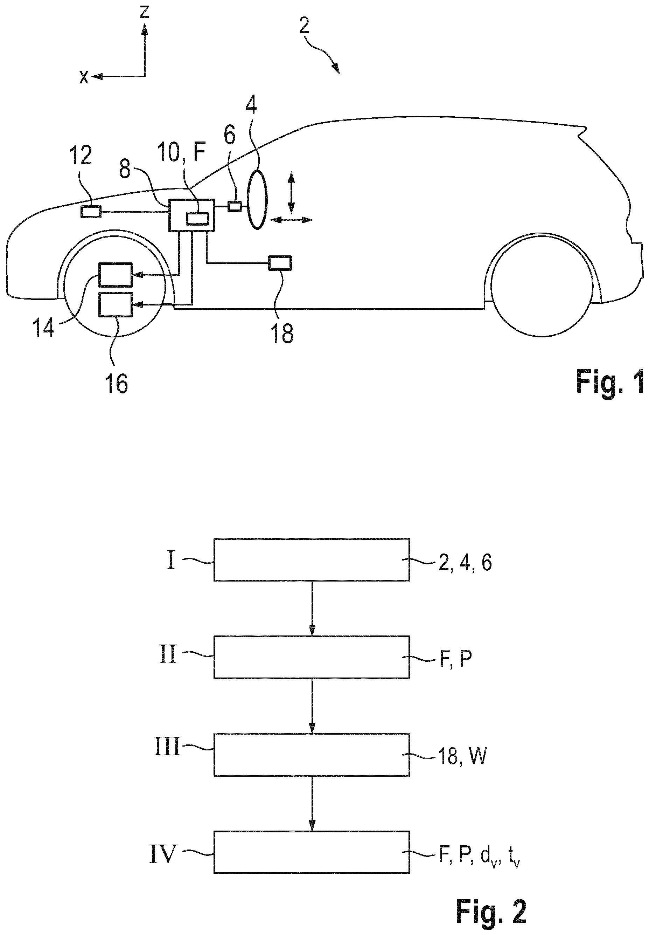

In der Fig. 1 ist schematisch ein Kraftfahrzeug 2 gezeigt. Dieses umfasst ein Lenkrad 4, welches in und entgegen der Fahrzeuglängsrichtung X, und/oder in und entgegen der Fahrzeughochrichtung Z verstellbar ist, was in der Fig. 1 jeweils anhand eines Doppelpfeils dargestellt ist. Die Fahrzeuglängsrichtung ist im nebenstehenden Richtungsdiagramm mit dem Bezugszeichen "X" und die Fahrzeughochrichtung ist im nebenstehenden Richtungsdiagramm mit dem Bezugszeichen "Z" versehen.

Das Kraftfahrzeug 2 umfasst einen Sensor 6, der dazu eingerichtet ist, dass ein Verstellen des Lenkrads bezüglich der Fahrzeughochrichtung Z und/oder in Fahrzeuglängsrichtung X erkannt wird. Beispielsweise ist oder umfasst der Sensor 6 Kamera, anhand welcher der Verstellvorgang erkannt werden kann. Weiter beispielsweise ist oder umfasst eine Verstellelektronik zum automatischen Verstellen des Lenkrads bei Betätigung eines entsprechenden Bedienelements den Sensor 6, insbesondere ist der Sensor 6 mit dem Bedienelement der Verstellelektronik, signalübertragungstechnisch gekoppelt. Allenfalls ist der Sensor 6 signalübertragungstechnisch mit einer Steuereinheit 8 gekoppelt.

Die Steuereinheit 8 umfasst des Weiteren einen Speicher 10, auf welchem der Programmcode einer Fahrerassistenzfunktion F hinterlegt ist.

Des Weiteren weist das Kraftfahrzeug 2 einen weiteren Sensor 12 auf, der dazu eingerichtet ist, die Umgebung des Kraftfahrzeugs 2 zu erfassen, also entsprechende Umgebungsdaten zu erfassen. Zweckmäßiger Weise dient der Sensor 12 zur Erkennung einer Fahrspur auf der Fahrbahn, und/oder zur Erfassung von Fahrzeugdaten, wie beispielsweise der aktuellen Fahrzeuggeschwindigkeit. Beispielsweise ist oder umfasst dieser Sensor 12 eine Kamera oder ein Lidar.

Der Sensor 12 ist mit der Steuereinheit 8 signalübertragungstechnisch verbunden. Gemäß einer nicht weiter dargestellten Alternative ist die Steuereinheit 8 Bestandteil des Sensors, mit anderen Worten ist die Steuereinheit in den Sensor 12 integriert.

Die Steuereinheit 8 ist ausgangsseitig mit einer Lenkung und/oder mit einem Antrieb des Kraftfahrzeugs 2 signalübertragungstechnisch verbunden. In der Fig. 1 ist die Lenkung (Lenkeinrichtung) mit dem Bezugszeichen 14 und/oder der Antrieb mit dem Bezugszeichen 16 versehen.

Eine Einrichtung 18 zur Ausgabe eines Warnsignals an den Fahrer ist ebenfalls mit der Steuereinheit 8 signalübertragungstechnisch verbunden. Beispielsweise ist die Einrichtung 18 als ein Lautsprecher oder als ein Display ausgebildet.

Zusammenfassend bilden zumindest der Sensor 6 und die Steuereinheit 8 eine Einrichtung 20, welche zur Durchführung des in der Fig. 2 näher dargestellten Verfahrens vorgesehen und eingerichtet ist. Sofern die Steuereinheit Bestandteil einer Auswerte- und Steuereinheit des Sensors 12 ist, umfasst die Einrichtung auch den Sensor 12.

In der Fig. 2 ist ein Flussdiagramm gezeigt, dass ein Verfahren zum Betrieb des Kraftfahrzeugs 2 repräsentiert.

Hierbei wird in einem ersten Schritt ein Verstellen des Lenkrads 4 in und/oder entgegen der Fahrzeuglängsrichtung X und/oder in und/oder entgegen der Fahrzeughochrichtung Y anhand des Sensors 6 erfasst. Der Sensor 6 gibt ein Signal an die Steuereinheit 8 aus, welches das Verstellen des Lenkrads 4 repräsentiert.

Wenn das Lenkrad 4 verstellt wird, und somit, wenn vom Sensor 6 das entsprechende Signal an die Steuereinheit 8 ausgegeben und von dieser empfangen wird, wird in einem zweiten Schritt II die Fahrerassistenzfunktion F aktiviert. Also wird das Kraftfahrzeug 2 anhand der Fahrerassistenzfunktion F betrieben, insbesondere gesteuert. Insbesondere wird hierbei eine Längs- und/oder eine Querbeschleunigung durch entsprechende Ansteuerung des Antriebs 16 und/oder der Lenkung 14 bewirkt.

Alternativ oder zusätzlich hierzu wird in Schritt II eine bereits aktivierte Fahrerassistenzfunktion F, insbesondere einer deren Parameter P geändert und das Kraftfahrzeug 2 mit dieser geänderten Fahrerassistenzfunktion betrieben, insbesondere gesteuert. Insbesondere wird hierbei eine Längs- und/oder eine Querbeschleunigung durch entsprechende Ansteuerung des Antriebs 16 und/oder der Lenkung 14 bewirkt. Aufgrund der Änderung ist die Fahrerassistenzfunktion F, insbesondere einer deren Parameter P, beim Verstellen des Lenkrads 4 unterschiedlich zu einem Betrieb des Kraftfahrzeugs 2, bei dem das Lenkrad 4 nicht verstellt wird.

Weiter alternativ oder zusätzlich hierzu wird in Schritt II die Fahrerassistenzfunktion F aktiviert und diese, insbesondere einer deren Parameter P, geändert. Das Kraftfahrzeug 2 wird dann mit dieser geänderten Fahrerassistenzfunktion F betrieben, insbesondere gesteuert. Insbesondere wird hierbei eine Längs- und/oder eine Querbeschleunigung durch entsprechende Ansteuerung des Antriebs 16 und/oder der Lenkung 14 bewirkt. Aufgrund der Änderung ist die Fahrerassistenzfunktion F, insbesondere einer deren Parameter P, beim Verstellen des Lenkrads 4 unterschiedlich zu einem Betrieb des Kraftfahrzeugs 2, bei dem das Lenkrad 4 nicht verstellt wird.

Zusammenfassend ist die Fahrerassistenzfunktion F derart ausgebildet, dass diese als Reaktion auf das Verstellen des Lenkrads aktiviert und/oder geändert wird.

Beispielsweise wird ein Abstandsregeltempomat als Fahrerassistenzfunktion F aktiviert und/oder die Zeitlücke als deren Parameter P vergrößert.

Alternativ oder zusätzlich hierzu wird eine Setzgeschwindigkeit als Parameter P für eine Geschwindigkeitsregelung der Fahrerassistenzfunktion F, die beispielweise als Abstandsregeltempomat oder als Tempomat ausgebildet ist, geändert, vorzugsweise reduziert.

Alternativ oder zusätzlich hierzu wird eine Maximalgeschwindigkeit für das Kraftfahrzeug 2 vorgegeben. Diese Beschränkungsfunktion der Fahrzeuggeschwindigkeit bildet dann die oder eine weitere Fahrerassistenzfunktion F.

Alternativ oder zusätzlich hierzu wird ein Spurhalteassistent als Fahrerassistenzfunktion F aktiviert.

Alternativ oder zusätzlich hierzu wird eine maximale Längs- und/oder eine maximale Querbeschleunigung des Kraftfahrzeugs für die Steuerung des Kraftfahrzeugs anhand der Fahrerassistenzfunktion F, welche insbesondere als der Spurhalteassistenten, als der Abstandsregeltempomat oder als der Tempomat ausgebildet ist, erhöht wird.

Alternativ oder zusätzlich hierzu wird als Änderung der Fahrerassistenzfunktion F in Schritt II eine Aktivierungsschwelle als deren Parameter P reduziert. So wird beispielsweise ein Schwellenwert als Aktivierungsschelle für die Länge einer erkannte Spurbegrenzung, beispielsweise Fahrstreifen auf der Fahrbahn, reduziert, der erreicht werden muss, bevor ein Lenkeingriff oder eine Beschleunigung des Kraftfahrzeugs durch die Fahrerassistenzfunktion F durchgeführt werden kann. Weiter beispielsweise wird eine für den Lenkeingriff der insbesondere als Spurhalteassistenten ausgebildeten Fahrerassistenzfunktion F erforderliche (Fahrzeug-) Mindestgeschwindigkeit reduziert.

Im optionalen Schritt III wird ein Warnsignal anhand der Einrichtung 18 an den Fahrer ausgegeben. Zweckmäßiger Weise wird das Warnsignal W dann ausgegeben, wenn das Verstellen des Lenkrads 4 anhand des Sensors 6 erfasst wurde, wenn die Fahrerassistenzfunktion F aufgrund dessen aktiviert oder geändert wird, wenn die Fahrerassistenzfunktion F beendet oder dessen Änderung rückgängig gemacht wird, und/oder wenn der Verstellvorgang (das Verstellen) des Lenkrads 4 nach einer vorgegebenen Zeitdauer noch nicht beendet wurde.

In einem Schritt IV. wird die Fahrerassistenzfunktion F, die als Reaktion auf das Verstellen des Lenkrads 4 aktiviert wurde, beendet und/oder die Änderung der Fahrerassistenzfunktion F, die als Reaktion auf das Verstellen des Lenkrads 4 vorgenommen wurde, rückgängig gemacht, wenn seit der Aktivierung bzw. seit der Vornahme der Änderungen eine vorgegebene Zeitdauer tv vergangen oder eine vorgegebene Distanz dv durch das Kraftfahrzeug zurückgelegt wurde.

Alternativ hierzu wird die Fahrerassistenzfunktion F beendet bzw. die Änderung der Fahrerassistenzfunktion F rückgängig gemacht, wenn der Verstellvorgang des Lenkrads 4 beendet wurde und die vorgegebene Zeitdauer tv oder Distanz dv noch nicht erreicht wurde.

Die Erfindung ist nicht auf die vorstehend beschriebenen Ausführungsbeispiele beschränkt. Vielmehr können hieraus im Rahmen der Ansprüche auch andere Varianten der Erfindung vom Fachmann abgeleitet werden, ohne den Gegenstand der Erfindung zu verlassen. Insbesondere sind ferner alle im Zusammenhang mit den Ausführungsbeispielen und/oder in den Ansprüchen beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Lenkrad
- 6: Sensor für die Lenkradverstellung
- 8: Steuereinheit
- 10: Speicher
- 12: Sensor Umgebung des Fahrzeugs
- 14: Lenkung
- 16: Antrieb
- 18: Einrichtung zur Ausgabe eines Warnsignals
- 20: Einrichtung zur Durchführung des Verfahrens

- dv: vorgegebene Distanz
- tv: vorgegebene Zeitdauer
- F: Fahrerassistenzfunktion
- P: Parameter der Fahrerassistenzfunktion
- W: Warnsignal
- X: Fahrzeuglängsrichtung
- Z: Fahrzeughochrichtung

- I: Verstellen des Lenkrads
- II: Aktivieren und/oder Ändern der Fahrerassistenzfunktion
- III: Ausgabe eines Warnsignals
- IV: Beenden der Fahrerassistenzfunktion und/oder Rückgängigmachen der Änderung

## Patentansprüche

1. Verfahren zum Betrieb eines Kraftfahrzeugs (2) mit einem in Fahrzeuglängs- und/oder in Fahrzeughochrichtung verstellbaren Lenkrad (4) sowie mit einer Fahrerassistenzfunktion (F), wobei, wenn das Lenkrad (4) verstellt wird, die Fahrerassistenzfunktion (F) aktiviert und/oder die Fahrerassistenzfunktion (F) geändert wird.

2. Verfahren nach Anspruch 1,
**dadurch gekennzeichnet,**
**dass** die Fahrerassistenzfunktion (F) und/oder die Änderung der Fahrerassistenzfunktion (F) nach einer vorgegebenen Zeitdauer (tv) oder nach vorgegebener zurückgelegter Distanz (dᵥ)beendet wird.

3. Verfahren nach Anspruch 1 oder 2,
**dadurch gekennzeichnet,**
**dass** bei einem Abstandsregeltempomat als Fahrerassistenzfunktion (F) die Zeitlücke vergrößert wird.

4. Verfahren nach einem der Ansprüche 1 bis 3,
**dadurch gekennzeichnet,**
**dass** eine Setzgeschwindigkeit für eine Geschwindigkeitsregelung der Fahrerassistenzfunktion (F) geändert, insbesondere reduziert, wird.

5. Verfahren nach einem der Ansprüche 1 bis 4,
**dadurch gekennzeichnet,**
**dass** eine Maximalgeschwindigkeit für das Kraftfahrzeug (2) vorgegeben wird.

6. Verfahren nach einem der Ansprüche 1 bis 5,
**dadurch gekennzeichnet,**
**dass** ein Spurhalteassistent als Fahrerassistenzfunktion (F) aktiviert wird, und/oder dass eine Mindestgeschwindigkeit für die Aktivierung des Spurhalteassistenten reduziert wird.

7. Verfahren nach einem der Ansprüche 1 bis 6,
**dadurch gekennzeichnet,**
**dass** eine maximale Längs- und/oder eine maximale Querbeschleunigung des Kraftfahrzeugs (2) für die Steuerung des Kraftfahrzeugs (2) anhand der Fahrerassistenzfunktion (F) erhöht wird.

8. Verfahren nach einem der Ansprüche 1 bis 7,
**dadurch gekennzeichnet,**
**dass** eine Aktivierungsschwelle für die Fahrerassistenzfunktion (F) reduziert wird.

9. Verfahren nach einem der Ansprüche 1 bis 8,
**dadurch gekennzeichnet,**
**dass**, insbesondere in Abhängigkeit einer Fahrzeuggeschwindigkeit, ein Warnsignal (W) ausgegeben wird.

10. Kraftfahrzeug (2) mit einem verstellbaren Lenkrad (4), mit einer Fahrerassistenzfunktion (F), sowie mit einer Einrichtung (20) zur Durchführung des Verfahrens nach einem der Ansprüche 1 bis 9.
